# FASCICULE DE BREVET EUROPEEN

(11) **EP 4 453 512 B1**
(45) Date de publication et mention de la délivrance du brevet: **04.03.2026**
(21) Numéro de dépôt: 22830279.0
(22) Date de dépôt: 22.12.2022
(51) Int. Cl.: G01C 21/34, B60W 60/00, G05D 1/00

(54) **PROCÉDÉ DE MODÉLISATION D'UN ENVIRONNEMENT TACTIQUE D'UN VÉHICULE AUTOMOBILE**
VERFAHREN ZUR MODELLIERUNG EINER TAKTISCHEN UMGEBUNG EINES KRAFTFAHRZEUGS
METHOD FOR MODELLING A TACTICAL ENVIRONMENT OF A MOTOR VEHICLE

(30) Priorité: 22.12.2021 FR 2114239
(43) Date de publication de la demande: 30.10.2024
(73) Titulaire: Renault s.a.s, 92100 Boulogne Billancourt (FR); Centre National de la Recherche Scientifique (CNRS), 75794 Paris Cedex 16 (FR); UTC (Université de Technologie de Compiègne), 60203 Compiègne cedex (FR)
(72) Inventeur: ARMAND, Alexandre, 78084 Guyancourt (FR); BONNIFAIT, Philippe, 60200 Compiègne (FR); SANCHEZ, Corentin, 60200 Compiègne (FR); XU, Philippe, 60200 Compiègne (FR)
(74) Mandataire: Novaimo
(86) Numéro de dépôt international: PCT/EP2022/087597
(87) Numéro de publication internationale: WO 2023/118498

(56) Documents cités:
- US-A1- 2018 189 323

## Description

L'invention concerne un procédé de modélisation d'un environnement d'un véhicule automobile. L'invention porte encore sur un dispositif de modélisation d'un environnement d'un véhicule automobile.

Un véhicule intelligent ou autonome est amené à prendre des décisions en permanence, par rapport à la situation dans laquelle il se trouve. Dans la littérature, on distingue trois niveaux de décisions prises par un véhicule autonome :
- un premier niveau de décision dit opérationnel portant sur des décisions à prendre dans une première fenêtre de temps très restreinte, de l'ordre de la milliseconde et à l'horizon d'une seconde par exemple,
- un deuxième niveau de décision dit tactique portant sur des décisions à moyen terme, par exemple des décisions à prendre dans un intervalle de temps supérieur à la seconde et limité à une dizaine de secondes,
- un troisième niveau de décision dit stratégique portant sur des décisions à long terme, par exemple des décisions à prendre dans plus de dix secondes par rapport à l'instant présent.

Les décisions opérationnelles sont prises à haute fréquence, à partir d'une représentation fine et précise de l'environnement proche dans lequel le véhicule se trouve. Les décisions stratégiques sont, quant à elles, prises à basse fréquence et ne nécessitent qu'une représentation à haute granularité de l'environnement du véhicule, sur une portée pouvant dépasser le kilomètre. Ces deux types de représentation de l'environnement, fine pour des décisions opérationnelles ou à haute granularité pour des décisions stratégiques, sont déjà largement répandues. En revanche, les représentations de l'environnement dédiées aux prises de décisions tactiques sont moins répandues. La présente invention propose d'y remédier.

On connait de l'art antérieur, notamment de US2018/0322777A1, des solutions mettant en œuvre des grilles d'occupation de l'espace environnant le véhicule automobile. Toutefois ces grilles présentent des inconvénients :
- elles modélisent une zone de dimension fixe, sans adapter la modélisation au contexte de circulation du véhicule automobile, ou
- les cellules constituant la grille ne peuvent prendre que trois états : libre, occupé ou indéfini.

On connaît également du document US2018/189323A1 un système de gestion de cartes haute définition pour véhicules autonomes, dans lequel les tuiles et sous-tuiles de la carte sont compressées, préchargées, décompressées et mises en cache en prédisant, en fonction de la position actuelle et de l'itinéraire (y compris tous les chemins possibles), quelles tuiles seront traversées prochainement.

Le but de l'invention est de fournir un dispositif et procédé de modélisation d'un environnement tactique d'un véhicule automobile remédiant aux inconvénients ci-dessus et améliorant les dispositifs et procédés de modélisation d'un environnement tactique d'un véhicule automobile. En particulier, l'invention permet de réaliser un dispositif et un procédé qui soient simples et fiables et qui adaptent la modélisation de l'environnement au contexte de circulation du véhicule, et qui fournissent une description enrichie de l'état des cellules d'une grille d'occupation particulièrement adapté aux prises de décision tactiques.

A cet effet, l'invention porte sur un procédé de modélisation d'un environnement tactique d'un premier véhicule automobile autonome, l'environnement tactique désignant des données environnementales du véhicule automobile autonome susceptibles d'impacter une prise de décision tactique portant sur des décisions à moyen terme. Le premier véhicule automobile autonome comprend :
- un ensemble de moyens de perception,
- un module de décision, et
- un module de modélisation géométrique d'un ensemble de voies de circulation à prendre en compte par le module de décision,
   l'ensemble de voies comprenant des voies de premier ordre interagissant directement avec une voie de circulation où circule le premier véhicule automobile autonome selon un mode d'interaction défini dans un ensemble prédéfini de modes d'interaction, et des voies de second ordre interagissant avec les voies de premier ordre, selon un mode d'interaction défini dans l'ensemble prédéfini de modes d'interaction,
   l'ensemble prédéfini de modes d'interaction comprenant au moins un mode d'interaction parmi un maintien du véhicule automobile autonome sur sa voie de circulation, un changement de voie du véhicule automobile autonome sur une voie adjacente à sa voie de circulation, une fusion de la voie du véhicule automobile autonome avec une autre voie de circulation, une traversée de la voie du véhicule automobile autonome par au moins une autre voie de circulation.

En outre, le procédé de modélisation comprend :
- une première étape de construction d'un modèle géométrique, par le module de modélisation géométrique, d'un ensemble de voies de circulation du premier ordre et du second ordre et de décomposition des voies de circulation en un ensemble de cellules de longueur identique,
- une deuxième étape d'estimation, à partir de données issues de l'ensemble de moyens de perception, d'un premier état d'occupation de chaque cellule de l'ensemble de cellules comme étant soit un état libre, soit un état occupé, soit un état indéterminé, l'état indéterminé étant attribué à une cellule située hors d'un champ de vue de l'ensemble de moyens de perception et/ou à une cellule au moins partiellement cachée par un obstacle situé entre le premier véhicule automobile autonome et la cellule,
- une troisième étape de définition, à partir de données issues de l'ensemble de moyens de perception, d'un deuxième état d'occupation pour chaque cellule donnée dont le premier état d'occupation est indéterminé comme étant neutralisé ou sécurisé, par analyse du trafic situé sur les voies de circulation du second ordre, comprenant une sous-étape d'attribution d'un état neutralisé à la cellule donnée si un deuxième véhicule, distinct du premier véhicule automobile autonome et circulant sur une voie de deuxième ordre, occupe une première cellule située au croisement d'une voie de premier ordre et de la voie de second ordre et en aval de la cellule donnée selon le sens de circulation de la voie de premier ordre,
- une quatrième étape de transmission au module de décision d'un modèle environnemental comprenant une association d'un état d'occupation à chaque cellule du modèle géométrique, l'état d'occupation d'une cellule étant le deuxième état s'il est défini, sinon l'état d'occupation d'une cellule étant le premier état.

La troisième étape peut comprendre, suite à la sous-étape d'attribution d'un état neutralisé, une sous-étape d'attribution d'un état sécurisé à la cellule donnée comprenant une détermination d'une zone d'arrêt d'urgence associée à chaque véhicule environnant le premier véhicule automobile autonome.

La détermination d'une zone d'arrêt d'urgence peut comprendre :
- une détermination d'un ensemble de trajectoires possibles du véhicule environnant, puis
- pour chaque trajectoire possible,
   * un calcul d'une distance d'arrêt du véhicule environnant et
   * une détermination d'un groupe de cellules adjacentes situé sur la trajectoire possible, à l'avant du véhicule environnant et à une distance du véhicule environnant inférieure à la distance d'arrêt du véhicule environnant,
      la zone d'arrêt d'urgence du véhicule environnant pouvant être l'intersection des groupes de cellules adjacentes associés à chaque trajectoire possible, puis
- une attribution d'un état sécurisé à la chaque cellule de la zone d'arrêt d'urgence dont le deuxième état d'occupation est différent de l'état neutralisé.

La deuxième étape d'estimation d'un premier état de chaque cellule de l'ensemble de cellules peut comprendre une superposition de l'ensemble de cellules et d'une carte de répartition d'un espace couvert par le champ de vue en zones libres, occupées ou indéterminées, la carte de répartition étant issue de l'ensemble de moyens de perception.

L'état d'une cellule peut être :
- occupé si un premier nombre de points de la cellule se situant dans une ou plusieurs zones occupées de la carte de répartition est supérieur à un premier seuil donné, sinon
- libre si un deuxième nombre de points de la cellule se situant dans une ou plusieurs zones libres de la carte de répartition est supérieur à un deuxième seuil donné, sinon
- indéterminé.

Les premier et deuxième seuils donnés peuvent être soit un nombre minimal de points en valeur absolue, soit un pourcentage minimal d'un nombre total de points contenus dans la cellule.

La carte de répartition peut comprendre une représentation de l'espace environnant le premier véhicule automobile autonome par des polygones, ou par une grille d'occupation, ou par une carte de disparité.

Les moyens de perception peuvent fournir des données de perception et un indice de confiance associé aux données de perception, et la première étape de construction d'un modèle géométrique peut comprendre :
- une sous-étape de réception de données de perception issues de l'ensemble de moyens de perception, et d'un indice de confiance associé aux données de perception,
- une sous-étape de calcul d'un pas de discrétisation optimisé en fonction de l'indice de confiance,
- une sous-étape de transmission du pas de discrétisation optimisé au module de modélisation géométrique, puis
- une sous-étape de réception d'un modèle géométrique issu du module de modélisation géométrique, le modèle géométrique comprenant un ensemble de voies de premier et de second ordre décomposées en un ensemble de cellules de longueur optimisée.

La sous-étape de calcul d'un pas de discrétisation optimisé peut comprendre :
- une minimisation d'un nombre de cellules faussement négatives, une cellule faussement négative étant estimée dans l'état libre, dans l'état neutralisé ou dans l'état sécurisé alors qu'elle est en réalité dans l'état occupé,
   et optionnellement,
- une minimisation d'un nombre de cellules faussement positives, une cellule faussement positive étant estimée dans l'état occupé, alors qu'elle est en réalité dans l'état libre, dans l'état neutralisé ou dans l'état sécurisé.

L'invention porte en outre sur un dispositif de modélisation d'un environnement d'un premier véhicule automobile autonome, le premier véhicule automobile autonome étant équipé d'un moyen de contrôle autonome de mouvement et d'un module de décision. Le dispositif comprend des éléments matériels et/ou logiciels mettant en œuvre le procédé tel que défini précédemment.

L'invention porte également sur un produit programme d'ordinateur comprenant des instructions de code de programme enregistrées sur un support lisible par ordinateur pour mettre en œuvre les étapes du procédé tel que défini précédemment lorsque ledit programme fonctionne sur un ordinateur. L'invention porte également sur un produit programme d'ordinateur téléchargeable depuis un réseau de communication et/ou enregistré sur un support de données lisible par un ordinateur et/ou exécutable par un ordinateur, comprenant des instructions qui, lorsque le programme est exécuté par l'ordinateur, conduisent celui-ci à mettre en œuvre le procédé tel que défini précédemment.

L'invention porte encore sur un support d'enregistrement de données, lisible par un ordinateur, sur lequel est enregistré un programme d'ordinateur comprenant des instructions de code de programme de mise en œuvre du procédé tel que défini précédemment. L'invention porte encore sur un support d'enregistrement lisible par ordinateur comprenant des instructions qui, lorsqu'elles sont exécutées par un ordinateur, conduisent celui-ci à mettre en œuvre le procédé tel que défini précédemment.

Les dessins annexés représentent, à titre d'exemple, un mode de réalisation d'un dispositif de modélisation d'un environnement d'un véhicule automobile et un mode d'exécution d'un procédé de modélisation d'un environnement automobile selon l'invention.
La figure 1 représente un véhicule automobile équipé d'un dispositif de modélisation d'un environnement.
La figure 2 est une représentation alternative d'un véhicule automobile équipé d'un dispositif de modélisation d'un environnement.
La figure 3 illustre un exemple de modélisation des voies de circulation à prendre en compte pour une décision tactique du véhicule automobile.
La figure 4 illustre un premier mode de réalisation d'une représentation de l'occupation de l'espace environnant le véhicule automobile.
La figure 5 illustre un deuxième mode de réalisation d'une représentation de l'occupation de l'espace environnant le véhicule automobile.

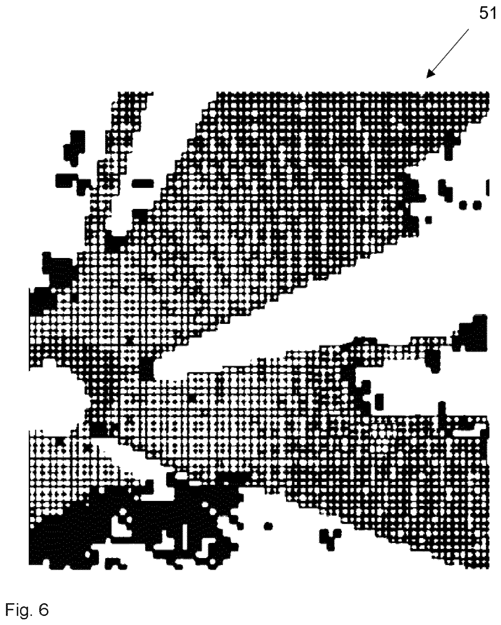

La figure 6 est un ordinogramme d'un mode d'exécution d'un procédé de modélisation d'un environnement selon l'invention.
La figure 7 représente une première grille de modélisation des voies de circulation générée avec un premier pas de discrétisation de longueur réduite.
La figure 8 représente une deuxième grille de modélisation des voies de circulation générée avec un deuxième pas de discrétisation supérieur au premier pas de discrétisation.
La figure 9 illustre un traitement d'agrégation entre une grille de modélisation des voies de circulation et la portée de vue d'un ensemble de moyens de perception du véhicule automobile.
La figure 10 illustre un traitement d'agrégation entre une grille de modélisation des voies de circulation et une représentation par grille d'occupation des données issues de moyens de perception.
La figure 11 illustre un traitement d'agrégation entre une grille de modélisation des voies de circulation et une représentation par polygones des données issues de moyens de perception.
La figure 12 illustre une catégorisation de voies d'intérêt de premier et de second ordre selon un des états libre, occupé et indéterminé.
La figure 13 représente une première portion de voie de circulation dont l'état est neutralisé et une deuxième portion de voie de circulation dont l'état est sécurisé.

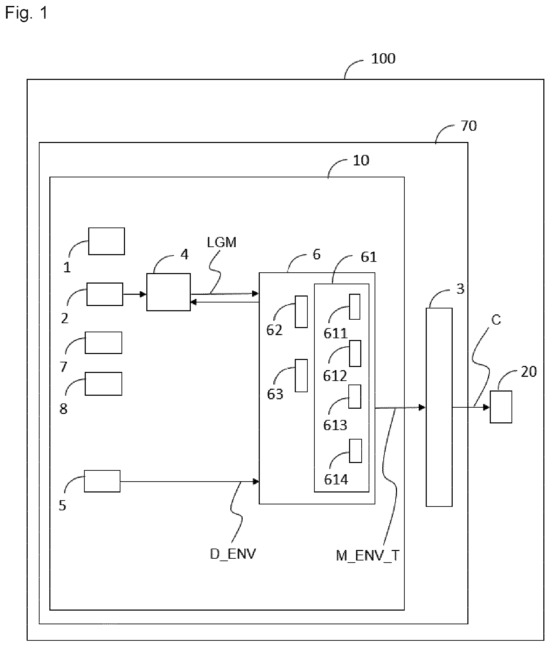

Un exemple d'un véhicule automobile 100 équipé d'un mode de réalisation d'un dispositif de modélisation d'un environnement tactique d'un véhicule automobile est décrit ci-après en référence à la figure 1.

Le véhicule automobile 100 peut être un véhicule automobile de n'importe quel type, notamment un véhicule de tourisme, un véhicule utilitaire, un camion ou encore un véhicule de transport en commun tel qu'un bus ou une navette. Selon le mode de réalisation décrit, le véhicule automobile 100 est un véhicule autonome et sera désigné "véhicule autonome" dans la suite de la description.

Cette illustration est donc faite à titre non limitatif. Notamment le véhicule automobile pourrait être un véhicule non autonome, équipé d'un système d'aide à la conduite, notamment un système d'aide à la conduite correspondant à un niveau supérieur ou égal au niveau 2 d'autonomie, c'est-à-dire correspondant à une autonomie partielle du véhicule.

Dans la suite du document, le terme d'environnement tactique du véhicule autonome 100 désigne les données environnementales du véhicule autonome 100 qui peuvent impacter une prise de décision tactique. Il peut s'agir des données environnementales susceptibles d'impacter une décision à prendre dans un intervalle de temps supérieur à la seconde et limité à une dizaine de secondes.

Le véhicule autonome 100 se déplace dans un environnement donné. Le véhicule autonome 100 comprend un système d'aide à la conduite 70 et un moyen de contrôle autonome 20 du véhicule autonome 100.

Le système d'aide à la conduite 70 transmet une commande de déplacement C au moyen de contrôle autonome 20. La commande de déplacement C peut comprendre une commande de déplacement longitudinal et/ou une commande de déplacement latéral. La commande de déplacement longitudinal peut comprendre une première consigne de couple destinée à un groupe motopropulseur du véhicule et/ou une deuxième consigne de couple destinée à un actionneur de freins du véhicule. La commande de déplacement latéral comprend un angle de rotation des roues directrices du véhicule autonome 100.

Le système d'aide à la conduite 70 comprend notamment un système 10 de modélisation de l'environnement tactique du véhicule autonome 100 et un module de décision 3. Le système 10 a pour rôle de construire une modélisation M_ENV_T de l'environnement tactique du véhicule autonome qui sera transmise au module de décision 3. La modélisation M_ENV_T permet au module de décision 3 de prendre une ou plusieurs décisions tactiques. Ces décisions seront ensuite traduites en commandes C de déplacement du véhicule autonome 100.

Le système 10 de modélisation de l'environnement tactique du véhicule autonome 100 comprend notamment les éléments suivants :
- un moyen de stockage de données dans lequel est enregistré une carte haute définition 1 comprenant une description du réseau routier sur lequel le véhicule autonome 100 évolue,
- un système de géolocalisation 2 permettant localiser le véhicule autonome 100 sur la carte 1,
- un module 4 de construction d'une représentation géométrique des voies d'intérêt pour le véhicule autonome 100,
- des moyens de perception 5 de l'environnement du véhicule autonome 100,
- une unité de calcul 6 comprenant un microprocesseur 61, une mémoire électronique locale 62 et des interfaces de communication 63 permettant au microprocesseur 61 de recevoir des données issues du système de géolocalisation 2, module de modélisation géométrique 4 et des moyens de perception 5 et de transmettre des données au module de modélisation géométrique 4.

La carte 1 fournit une description géométrique, topologique et sémantique du réseau routier.

En particulier, la carte 1 comprend les informations nécessaires pour déterminer, à partir d'une position du véhicule autonome 100 déterminée par le système de géolocalisation 2, tous les chemins possibles dont le point de départ est déterminé par ladite position.

Le réseau routier décrit par la carte 1 comprend des routes décomposées en voies de circulation. Les voies de circulation sont elles-mêmes décomposées en segments de voies ; la carte 1 associe un identifiant à chaque segment de voie.

Dans la suite du document, les termes « voie » ou « voie de circulation » font référence à un segment de voie associé à un identifiant unique défini par la carte 1.

La géolocalisation du véhicule autonome 100 par le système de géolocalisation 2 consiste à déterminer un identifiant d'une voie sur laquelle circule le véhicule autonome 100, et la position du véhicule sur ce segment de voie.

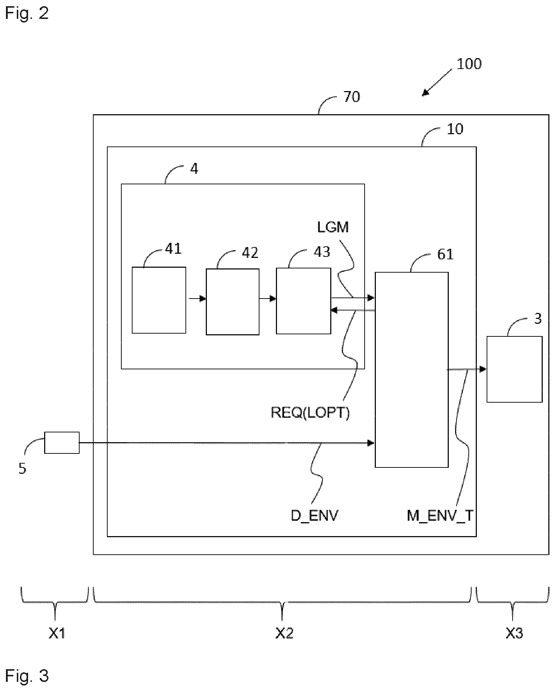

La figure 2 fournit une description haut niveau des traitements mis en œuvre dans le système d'aide à la conduite 70, concernant une prise de décision de niveau tactique. Le traitement se décompose en une perception X1 de l'environnement du véhicule autonome 100, puis une structuration X2 de la perception, puis une prise de décision X3 à partir de la perception structurée.

Ainsi, à partir d'une perception X1 de l'environnement tactique du véhicule autonome 100, notamment sur réception de données D_ENV issues de l'ensemble de moyens de perception 5, le système d'aide à la conduite 70 crée un modèle structuré M_ENV_T de l'environnement tactique du véhicule autonome 100, et transmet le modèle structuré M_ENV_T au module de décision 3.

La construction du modèle structuré M_ENV_T comprend les deux étapes suivantes :
- une première étape de création, par le module 4, d'une description géométrique LGM d'un ensemble de voies de navigation susceptibles de jouer un rôle dans une prise de décision tactique,
- une deuxième étape de structuration, par le microprocesseur 61, des données environnementales D_ENV selon la description géométrique LGM.

La description géométrique ou grille LGM créée par le module 4 est une représentation allocentrée et discrétisée (sous forme de grille constituée d'une succession de cellules jointives entre elles) des voies de navigation, dans le sens de la longueur et le long des voies de navigation.

Dans un mode de réalisation alternatif non décrit dans ce document, les voies pourraient également être décomposées en cellules dans le sens de la largeur. Dans ce cas, une grille LGM serait alors une représentation allocentrée et discrétisée (sous forme de grille constituée d'une succession de cellules jointives entre elles) des voies de navigation, dans le sens de la longueur et dans le sens de la largeur.

Une représentation allocentrée utilise un repère fixe dans le monde, contrairement à une représentation égocentrée qui utilise un repère se déplaçant avec le véhicule.

Chaque cellule de la grille LGM s'étend sur une longueur égale à un pas de discrétisation PDIS, et sur la largeur complète de la voie de navigation. La longueur des cellules est considérée dans le sens de circulation sur la voie de circulation en question. Ainsi, toutes les cellules de la grille LGM ont une longueur identique, égale au pas PDIS. Dans un mode de réalisation la valeur du pas fixe PDIS est déterminée en fonction de la précision de l'ensemble de moyens de perception 5 et/ou de la précision du moyen de géolocalisation 2, notamment la valeur du pas fixe est comprise entre dix centimètres et cinq cent centimètres. La valeur du pas fixe PDIS pourrait être comprise dans d'autres plages de valeurs.

Le pas de discrétisation PDIS peut également être modifié pour optimiser la fiabilité des données environnementales associées à chaque cellule, notamment la fiabilité du statut d'occupation de chaque cellule comme cela est décrit plus loin dans ce document.

La Figure 3 fournit un exemple d'une grille LGM relative au véhicule autonome 100. La flèche dirigée vers la droite indique le trajet que le véhicule autonome 100 s'apprête à suivre. Dans ce contexte, la grille LGM inclut une modélisation des voies suivantes, correspondant aux voies dites d'intérêt dans la situation courante du véhicule autonome 100 :
- la voie 151 sur laquelle circule le véhicule autonome 100 ainsi que la voie 152 qu'il s'apprête à suivre après avoir tourné à droite,
- la voie 153 adjacente à la voie de circulation du véhicule autonome 100 qui se trouve immédiatement à gauche et dans la même sens de circulation que la voie 151,
- la voie 154 venant de la gauche, qui va croiser le chemin du véhicule autonome 100.

Les autres voies de navigation ne sont pas modélisées dans la grille LGM car elles n'ont aucun impact sur les décisions à prendre par le véhicule autonome 100 à cet instant donné.

Selon un mode de réalisation préférentiel du module 4, les voies d'intérêt peuvent être du premier ordre ou du second ordre. Dans ce mode de réalisation, à partir d'une position donnée du véhicule autonome 100, on détermine un ensemble de chemins possibles pour le véhicule autonome 100, dans un horizon donné de temps ou de distance. Chaque chemin possible est ensuite considéré pour déterminer des voies d'intérêt du premier et du second ordre :
- les voies de premier ordre sont définies comme interagissant directement avec le chemin possible selon un mode d'interaction défini dans un ensemble prédéfini de modes d'interaction, et
- les voies de second ordre sont définies comme interagissant directement avec une voie de premier ordre selon un mode d'interaction défini dans un ensemble prédéfini de modes d'interaction.

Dans un mode de réalisation, l'ensemble prédéfini de modes d'interaction peut comprendre :
- un maintien du véhicule automobile 100 sur sa voie de circulation, et/ou,
- un changement de voie du véhicule automobile 100 sur une voie adjacente à sa voie de circulation, et/ou
- une fusion de la voie du véhicule automobile 100 avec une autre voie de circulation, et/ou
- une traversée de la voie du véhicule automobile 100 par au moins une autre voie de circulation.

Dans un mode de réalisation, la construction d'une LGM est commandée par le microprocesseur 61 sur transmission au module 4 d'une requête de construction REQ(LOPT), la requête pouvant contenir un pas de discrétisation optimisé LOPT. Ce point sera détaillé plus loin dans le document.

Les moyens de perception 5 peuvent comprendre tout moyen de perception permettant de caractériser une occupation spatiale de l'environnement, par exemple un ou plusieurs radars et/ou cameras et/ou lidars embarqués sur le véhicule autonome 100. Les moyens de perception 5 ont un champ de vue désigné dans la suite du document par l'expression champ de vue « FOV » pour l'acronyme « Field Of View ». Le champ de vue FOV est délimité par la portée des moyens de perception 5. Dans la suite du document, un point ou une zone situés en dehors du champ de vue sont dits non observables. Selon cette définition, une zone peut être observable mais cachée, par exemple par un obstacle (véhicule, bâtiment, ...) situé entre l'ensemble de moyens de perception 5 et la zone.

A l'intérieur du champ de vue FOV, les données issues de l'ensemble de moyens de perception 5 fournissent une représentation opérationnelle de l'occupation d'un espace environnant le véhicule autonome 100.

La représentation de l'occupation de l'espace environnant peut prendre différentes formes. Certaines représentations décomposent l'espace environnant le véhicule autonome 100 en zones dites occupées, libres, ou indéterminées, parmi lesquelles des représentations par polygones, des représentations sous forme de grilles d'occupation probabiliste ou évidentielle, ou des représentations par cartes de disparité.

Lorsque l'occupation de l'espace environnant est représentée pas des polygones, chaque polygone détermine le contour d'une zone qui peut être qualifiée par un état. Chaque segment du contour d'un polygone peut également fournir une information d'état (notamment lorsqu'un segment délimite un certain type d'objet).

Une représentation par grille d'occupation utilise une grille à deux dimensions pour quadriller l'espace environnant, la taille des cellules étant fixe et généralement plutôt petite. L'espace délimité par chaque cellule est caractérisé par une ou plusieurs informations, par exemple un état d'occupation et/ou une probabilité d'occupation et/ou une hauteur d'un objet occupant la cellule.

Les représentations par cartes de disparité sont construites à partir des images issues d'une paire de caméras stéréo. Ces représentations se présentent sous la forme d'une grille à trois dimensions d'une image de disparité (inversement proportionnelle à la profondeur).

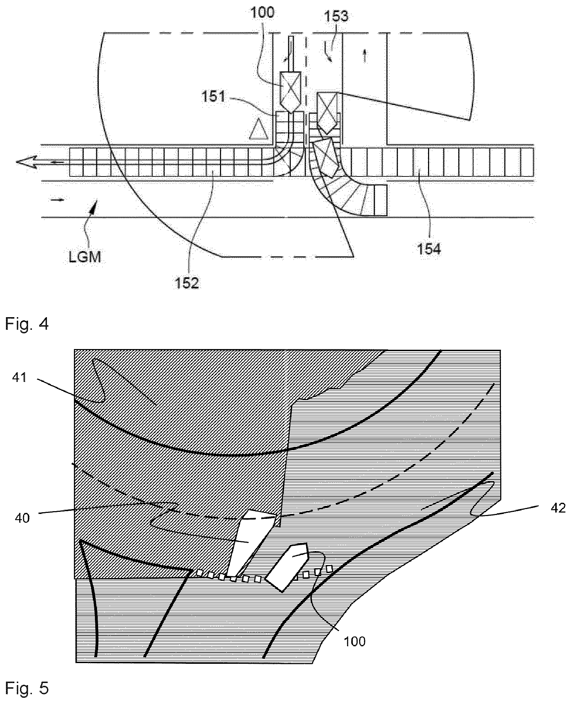

La figure 4 illustre un exemple de représentation de l'occupation spatiale par des polygones 40, 41, 42, le polygone 41 étant le complémentaire des polygones 40 et 42. La figure 5 illustre un exemple de représentation de l'occupation spatiale par une grille d'occupation 51.

Les informations issues des moyens de perception 5 permettent ainsi de catégoriser l'espace en zones dites libres, zones dites occupées et zones dites indéterminées. Une zone est dite libre si elle ne contient aucun obstacle ; elle est dite occupée si elle contient au moins un obstacle ; elle est dite indéterminée si elle se situe hors du champ de vue FOV ou si elle est au moins partiellement cachée par un obstacle. Par exemple, dans la figure 4, le polygone 40 représente une zone occupée, le polygone 41 représente une zone cachée et le polygone 42 représente une zone libre.

Le système d'aide à la conduite 10 peut également comprendre un réseau de communication 7 du véhicule autonome 100 - par exemple un réseau CAN-. Le réseau de communication 7 peut notamment fournir au microprocesseur 61 des données cinématiques du véhicule autonome 100, et des véhicules environnants comme la vitesse, l'accélération, le jerk.

Le microprocesseur 61 peut en outre avoir accès, via un réseau cellulaire, à une base de données partagée 8 comprenant des informations contextuelles, comme par exemple des mises à jour de carte, des notifications de zones de travaux, etc...

Dans le mode de réalisation de l'invention, le calculateur 61 permet d'exécuter un logiciel comprenant les modules suivants qui communiquent entre eux :
- un module 611 de construction d'un modèle géométrique d'un ensemble de voies, qui communique avec le module de modélisation géométrique 4, et l'ensemble de moyens de perception 5,
- un module 612 d'estimation d'un premier état d'occupation de chaque cellule du modèle géométrique, qui communique avec l'ensemble 5 de moyens de perception,

- un module 613 de définition d'un deuxième état d'occupation de cellules, qui communique avec l'ensemble de moyens de communication 5 et le réseau de communication 7.
- un module 614 de transmission d'un modèle environnemental, qui communique avec le module de décision 3.

Dans la première étape E1, on construit un modèle géométrique, ou grille LGM, d'un ensemble de voies ENS_VOIES de premier et de second ordre décomposées en un ensemble de cellules ENS_C de longueurs identiques.

La première étape E1 de construction d'un modèle géométrique comprend une sous-étape E14 de réception d'un modèle géométrique LGM issu du module de modélisation géométrique 4.

Dans la suite du document, le modèle géométrique est aussi appelé grille LGM.

Dans un mode de réalisation, le module de modélisation géométrique transmet périodiquement des mises à jour du modèle géométrique.

Dans un mode de réalisation, la sous-étape de réception E14 peut être précédée des sous étapes suivantes :
- une sous-étape E11 de réception de données de perception issues de l'ensemble de moyens de perception 5, et d'un indice de confiance IC associé aux données de perception,
- une sous-étape E12 de calcul d'un pas de discrétisation optimisé POPT en fonction de l'indice de confiance IC,
- une sous-étape E13 de transmission du pas de discrétisation optimisé POPT au module de modélisation géométrique 4.

La longueur des cellules, c'est-à-dire la taille de l'échantillonnage des voies de circulation, est un paramètre clé de la construction du modèle environnemental tactique M_ENV_T.

En effet, comme cela est expliqué plus loin dans ce document, la construction du modèle environnemental tactique M_ENV_T repose sur la caractérisation du statut de chaque cellule de la grille LGM comme étant indéterminé, libre, occupé, neutralisé ou sécurisé (ces deux derniers statuts étant déterminés par analyse du trafic situé sur les voies secondaires de la grille LGM). La connaissance du statut des cellules permet au véhicule autonome de prendre des décisions en minimisant les risques d'accident. De ce fait, le taux d'erreurs dans l'information fournie par une grille LGM doit se situer en dessous d'un seuil maximum d'erreurs.

Or, comme on le verra ultérieurement dans la description des étapes E2 et E3, le statut d'une cellule est défini à partir des données issues des moyens de perception 5, ces données comportant avantageusement un indice de confiance IC variable selon les conditions de perception. Il est donc primordial que la taille des cellules, c'est-à-dire la taille d'échantillonnage des voies de circulation soit adaptée à l'indice de confiance des données issues de moyens de perception 5.

Toutefois, l'indice de confiance peut être indéfini ou erroné. Dans ce cas, il existe un risque de choisir un pas de discrétisation trop précis par rapport à l'incertitude sur la localisation, ce qui augmente la probabilité d'attribuer un statut erroné aux cellules. Par exemple, on peut obtenir un nombre trop élevé de faux négatifs, c'est-à-dire de cellules estimée à tort comme étant libres, ce qui augmente le risque de collision.

Une solution consiste alors à augmenter le pas de discrétisation de la grille LGM, ce qui aura pour effet d'estimer de façon plus pessimiste le statut des cellules du fait des règles de détermination des statuts des cellules de la grille LGM (ces règles sont détaillées dans la description des étapes E2 et E3). Autrement dit, du fait des règles appliquées pour le calcul de l'état d'une cellule, en augmentant le pas de discrétisation on diminue les détections de faux négatifs, c'est-à-dire de cellules faussement libres, et du fait de l'augmentation de la longueur des cellules, on augmente la surface des zones faussement considérées comme occupées.

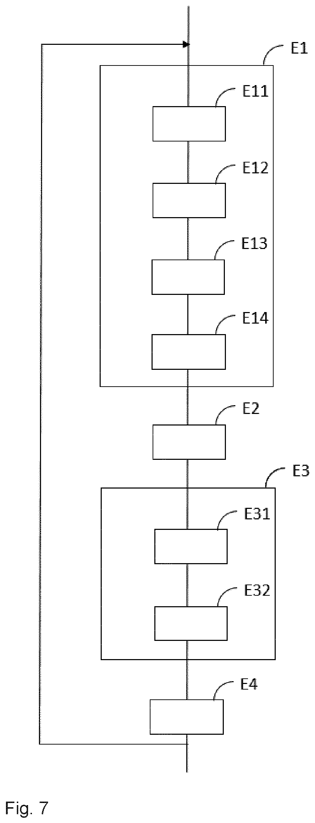

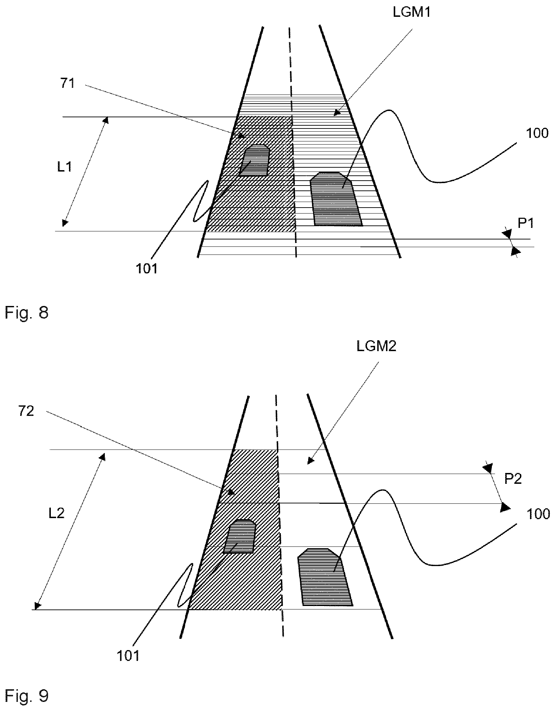

Les figures 7 et 8 illustrent l'effet du réglage du pas de discrétisation. La première figure représente une première grille LGM1 générée avec un premier pas de discrétisation P1 de longueur réduite. Un véhicule 101 situé sur la gauche du véhicule autonome 100 occupe une première série de cellules 71 s'étendant sur une première longueur L1.

La même scène est représentée par la figure 9, tandis qu'une deuxième grille LGM2 a été générée avec un deuxième pas de discrétisation P2 (supérieur au pas P1) pour générer une deuxième grille LGM2. Le véhicule 101 occupe alors une deuxième série de cellules 72 dont la longueur est L2 est supérieure à la longueur L1.

Si la localisation du véhicule 101 est précise alors le premier pas P1 est plus approprié que le deuxième pas P2. En revanche, si la localisation du véhicule 101 est peu précise alors le deuxième pas P2 est plus approprié que le premier pas P1.

Ainsi, dans la deuxième sous-étape E12, on calcule une valeur optimisée POPT du pas de discrétisation qui tient compte à la fois de l'indice d'incertitude associé aux moyens de perception 5 mais aussi d'un pourcentage maximal de cellules faussement considérées comme libres.

Dans un mode de réalisation, la valeur optimisée POPT peut être une variable de configuration du procédé, cette variable ayant préalablement été déterminée par simulation.

Un exemple d'une méthode de simulation permettant de calculer une valeur optimisée POPT est décrite ci-après :
- dans un premier temps, on enregistre un grand nombre de jeux de données issues des capteurs d'un véhicule de sorte à obtenir une échantillon suffisamment important pour être le plus représentatif possible des situations rencontrées par le véhicule,
- dans un deuxième temps, on rejoue les données par simulation pour évaluer le processus d'attribution d'un état à chaque cellule de la grille LGM ; puis en faisant varier le pas de discrétisation, on obtient alors une fonction de variation du nombre de faux négatifs en fonction du pas de discrétisation.
- on se fixe alors un taux de faux négatifs cible à ne pas dépasser ; le taux de faux négatifs étant strictement décroissant en fonction de l'augmentation du pas de discrétisation, une approche par dichotomie peut être utilisée pour trouver le plus petit pas de discrétisation permettant de respecter le taux maximal de faux négatifs.

Puis dans la troisième sous-étape E13 on transmet au module 4 la valeur optimisée POPT du pas de discrétisation.

Puis dans une troisième sous-étape E14 on reçoit une grille LGM issue du module 4, et dont le pas de discrétisation est égal à la valeur optimisée POPT.

On enchaine ensuite sur l'étape E2 de détermination, à partir de données issues de l'ensemble de moyens de perception 5, d'un premier état d'occupation de chaque cellule de l'ensemble de cellules ENS_C comme étant soit un état libre, soit un état occupé, soit un état indéterminé.

La figure 9 illustre un premier traitement E21 d'agrégation entre une grille LGM issue du module 4 et les données issues de l'ensemble de moyens de perception 5, consistant à déterminer un premier état de certaines cellules de la grille LGM en fonction de la portée de vue FOV de l'ensemble de moyens de perception 5.

Selon la logique illustrée par la figure 9, toute cellule 91, 92 de la grille LGM qui ne se situe pas totalement dans la portée de vue FOV est considérée comme non observable dans sa totalité et son premier état est indéterminé parce que l'on ne sait pas dire si elle est totalement libre ou au moins partiellement occupée.

Dans un deuxième traitement E22, on s'intéresse à un espace couvert par le champ de vue FOV. L'ensemble de moyens de perception fournit une carte 103 de répartition de cet espace en zones libres, occupées ou indéterminées, les zones indéterminées pouvant être cachées par un obstacle (par exemple un véhicule ou un bâtiment). Le traitement E22 consiste à agréger les cellules de la grille LGM avec la carte 103.

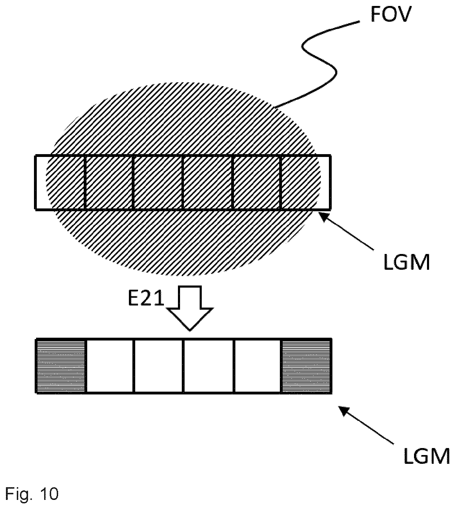

La figure 10 est une première illustration du deuxième traitement d'agrégation, dans lequel la carte de répartition 103 est une représentation par grille d'occupation. Le deuxième traitement E22 est appliqué aux cellules A1 à A6 de la grille LGM.

Tous les points de la cellule A1 se superposent à une zone libre de la carte 103 : la cellule A1 est donc considérée comme libre. Certains points de la cellule A2 se superposent à une zone occupée de la carte 103 alors que les autres points de la cellule A2 sont libres : la cellule A2 est donc considérée comme totalement occupée. Certains points de la cellule A3 se superposent à une zone indéterminée de la carte 103, alors que les autres points de la cellule A3 sont libres : la cellule A3 est donc considérée comme totalement indéterminée.

Dans le deuxième traitement d'agrégation E22, on applique ainsi la logique décrite dans le tableau 1 pour combiner l'état d'une première et d'une deuxième zones de la carte de répartition 103, les première et deuxième zones étant incluses dans une même cellule de la grille LGM.

**[Table 1]**

| | Etat d'une deuxième zone de la carte de répartition 103, la deuxième zoné étant incluse dans la cellule donnée | | |
|---|---|---|---|
| Etat d'une première zone de la carte de répartition 103, la première zone étant incluse dans une cellule donnée | Libre | Occupé | indéterminé |
| Libre | Libre | Occupé | indéterminé |
| Occupé | Occupé | Occupé | Occupé |
| indéterminé (caché) | Indéterminé | Occupé | indéterminé |

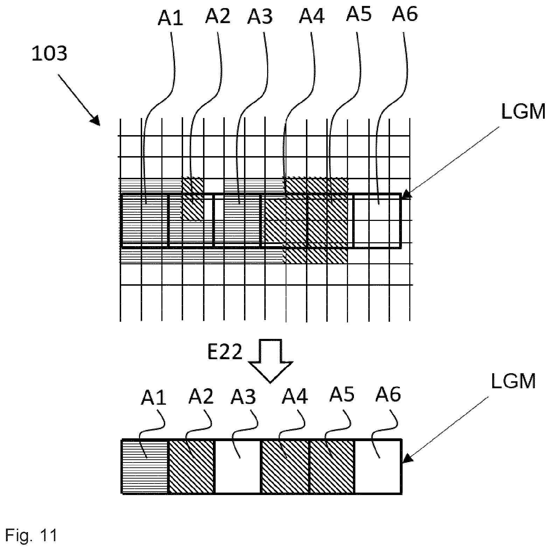

La figure 11 est une deuxième illustration du deuxième traitement d'agrégation E22, dans lequel la carte de représentation 103 est une représentation par polygones d'occupation. Le traitement d'agrégation est appliqué aux cellules B1 à B6 de la grille LGM.

Tous les points de la cellule B1 se superposent à une zone libre de la carte 103 : la cellule B1 est donc considérée comme libre. Certains points de la cellule B2 se superposent à une zone indéterminée de la carte 103, alors que les autres points de la cellule B2 sont libres : la cellule B2 est donc considérée comme totalement indéterminée. Le traitement de la cellule B3 est identique au traitement de la cellule B2. La cellule B4 se superpose à des zones respectivement occupée, libre et indéterminée de la carte 103 : la cellule B4 est donc considérée comme complètement occupée.

Cette description n'est pas limitative, notamment d'autres modes de réalisation de la carte 103 sont possibles.

Dans un mode de réalisation, l'état d'une cellule de la LGM pourrait être :
- occupé si un premier nombre de points de la cellule se situant dans une ou plusieurs zones occupées de la carte de répartition 103 est supérieur à un premier seuil donné MIN_OCC, sinon
- libre si un deuxième nombre de points de la cellule se situant dans une ou plusieurs zones libres de la carte de répartition 103 est supérieur à un deuxième seuil donné MIN_LIB, sinon
- indéterminé.

De plus, les premier et deuxième seuils donnés MIN_OCC, MIN_LIB pourraient correspondre soit à un nombre minimal de points en valeur absolue, soit un nombre minimal de points en pourcentage d'un nombre total de points contenus dans la cellule.

Par exemple, si le seuil MIN_LIB est fixé à 90% et si le seuil MIN_OCC est fixé à 15%, alors la règle appliquée pourrait être définie ainsi :
- si une cellule comprend au moins 15% de points dans l'état occupé, son état est occupé, sinon
- si elle comprend au moins 90% de points dans l'état libre, alors son état est libre, sinon,
- sinon son état est indéterminé.

Dans un mode de réalisation, on pourrait appliquer une distinction entre les cellules d'une grille LGM dont l'état indéterminé correspond à un état « caché par un obstacle » et les cellules d'une grille LGM dont l'état indéterminé correspond à un état « situé hors du champ de vue FOV ».

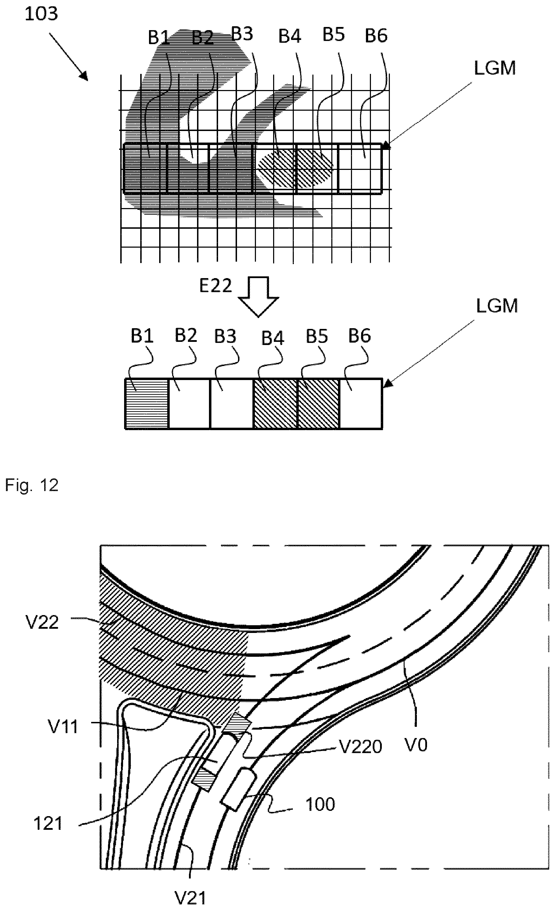

La figure 12 illustre une catégorisation de voies d'intérêt de premier et de second ordre selon l'un des trois états libre, occupé et indéterminé. En remarque, les cellules de la grille LGM ne sont pas représentées dans la figure 12 ; seules sont représentées les portions de voies du premier et du second ordre.

Dans la situation de conduite illustrée par la figure 12, le véhicule autonome 100 s'approche de l'entrée d'un rond-point. Il se déplace sur un itinéraire comprenant une entrée sur la voie extérieure d'un rond-point, notamment sur la voie de circulation V0.

Les voies de premier ordre et de second ordre relatives à l'itinéraire du véhicule autonome 100 comprennent :
- une voie de premier ordre V11, correspondant à une portion de la voie extérieure du rond-point située en amont de l'entrée du véhicule autonome 100 sur le rond-point,
- une première voie de second ordre V21, qui est une voie d'entrée sur le rond-point, adjacente à la voie de circulation V0 et convergeant vers la voie intérieure du rond-point,
- une deuxième voie de second ordre V22 correspondant à une portion de voie intérieure du rond-point, rejoignant la voie V21 en un point 122, et la voie V22 étant située en amont du point 122.

Un deuxième véhicule 121 circule sur la voie de second ordre V21, parallèlement au véhicule autonome 100. La présence du deuxième véhicule détermine une portion de voie dans l'état occupé V220, la portion de voie occupée délimitant une zone incluant la surface d'occupation au sol du deuxième véhicule 121.

De plus, dans la configuration représentée par la figure 12, la présence du deuxième véhicule 121 ne permet pas de déterminer la portion de voie de premier ordre V11 comme étant libre ou occupée, à partir des données issues des moyens de perception du véhicule autonome 100 ; de même elle ne permet pas de déterminer la portion de voie du second ordre V22 comme étant libre ou occupée. Les portions de voies V21 et V22 sont cachées et sont donc dans l'état indéterminé.

Dans le cas illustré par la figure 12, les autres portions de voies des voies d'intérêt sont libres.

Ainsi, à l'issue de l'étape E2, les cellules des voies d'intérêt du premier et du second ordre sont déterminées comme étant dans un état libre, occupé ou indéterminé.

On enchaine ensuite sur une troisième étape E3 de définition, à partir de données issues de l'ensemble de moyens de perception 5, d'un deuxième état d'occupation pour chaque cellule donnée dont le premier état d'occupation est indéterminé, comprenant une sous-étape E31 d'attribution d'un état neutralisé à la cellule donnée lorsqu'un deuxième véhicule 101, distinct du véhicule autonome 100 et circulant sur une voie de deuxième ordre, occupe une première cellule située au croisement d'une voie de premier ordre et de la voie de second ordre et en aval de la cellule donnée selon le sens de circulation de la voie de premier ordre.

Autrement dit, dans l'étape E3, on s'intéresse aux cellules dont l'état n'a pas pu être déterminé par le traitement des données issues de l'ensemble de moyens de perception 5. Pour cela, on exploite les données relatives aux voies d'intérêt du premier et du second ordre.

Notamment, dans une première sous-étape E31, on détermine un état neutralisé pour des cellules d'une voie de premier ordre de la grille LGM auxquelles on a attribué un état indéterminé dans l'étape E2 car elles sont cachées par un deuxième véhicule 121 s'interposant entre elles et le véhicule autonome 100.

Dans la suite du document, le terme « neutralisé » qualifie un état d'une cellule de la grille LGM dont le trafic ne peut pas interférer avec la trajectoire du véhicule autonome 100.

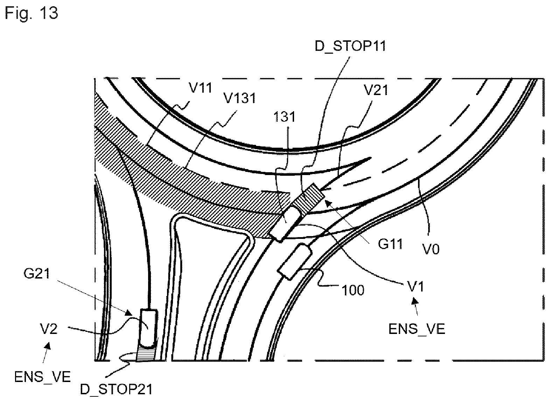

Par exemple, dans la configuration de trafic représentée par la figure 13, la position d'un deuxième véhicule 131 empêche l'intrusion, sur la voie de circulation du véhicule autonome 100, de tout véhicule se trouvant sur une portion V131 de la voie de premier ordre V11. En d'autres termes, les cellules de la portion de voie V131 située en amont du véhicule 131 sont dans un état neutralisé du fait de la présence du véhicule 131 se trouvant à la fois sur la voie de premier ordre V11 et sur la voie de deuxième ordre V21.

La sous-étape E31 comprend donc
- une détection d'un deuxième véhicule 131 distinct du véhicule autonome 100 et circulant sur une voie donnée de second ordre, occupant une première cellule située au croisement d'une voie de premier ordre et de la voie donnée de second ordre
- une détermination d'un ensemble de cellules situées en amont de la première cellule et dont le premier état d'occupation est indéterminé,
- une détermination du deuxième état de chaque cellule de l'ensemble de cellules comme étant neutralisé.

En outre, la troisième étape E3 peut comprendre, suite à la sous-étape E31, une sous-étape E32 d'attribution d'un état sécurisé à une cellule donnée dont l'état est indéterminé, comprenant une détermination d'une zone d'arrêt d'urgence associée à chaque objet dynamique environnant le véhicule autonome 100.

En effet, certaines cellules de la grille LGM dont l'état demeure indéterminé à l'issue de la sous-étape E31 peuvent être se voir attribuer un état sécurisé si elles se situent dans une zone d'arrêt d'urgence d'un véhicule environnant le véhicule autonome 100.

La sous-étape E32 comprend une détermination d'un ensemble ENS_VE de véhicules environnant le véhicule autonome 100. Dans une mode de réalisation, la détermination de l'ensemble ENS_VE de véhicules environnants s'effectue sur le champ de vue FOV. Alternativement, la détermination de l'ensemble ENS_VE pourrait s'effectuer sur une zone comprise dans le champ de vue FOV.

Puis pour chaque véhicule donné Vᵢ de l'ensemble ENS_VE, on détermine un ensemble ENS_Ti de trajectoires possibles Tᵢⱼ du véhicule donné Vᵢ, notamment en fonction de l'infrastructure routière.

Ensuite, pour chaque trajectoire possible Tᵢⱼ, on calcule une distance D_STOPᵢⱼ d'arrêt du véhicule Vᵢ sur la trajectoire Tᵢⱼ. Pour cela, dans un mode de réalisation on utilise les données issues de l'ensemble de moyens de perception 5 et/ou du réseau de communication 7, permettant de déterminer la vitesse instantanée du véhicule Vᵢ. A partir de la position courante du véhicule Vᵢ, pour chaque trajectoire Tᵢⱼ on détermine ainsi un groupe Gᵢⱼ de cellules adjacentes situé sur la trajectoire Tᵢⱼ, à l'avant du véhicule Vᵢ et à une distance du véhicule Vᵢ inférieure à la distance d'arrêt D_STOPᵢⱼ du véhicule Vᵢ.

Avantageusement, la zone d'arrêt d'urgence Z_STOPᵢ associée au véhicule Vi est ensuite déterminée comme étant l'intersection des groupes Gᵢⱼ de cellules adjacentes respectivement associés à chaque trajectoire Tᵢⱼ.

Enfin, l'état sécurisé sera attribué à toute cellule de la grille LGM
- dont l'état est indéterminé à l'issue de la sous-étape E31, et
- qui est entièrement contenue dans une zone d'arrêt d'urgence Z_STOPᵢ d'un véhicule Vᵢ de l'ensemble ENS_VE de véhicules environnant le véhicule autonome 100.

Autrement dit, une cellule de la grille LGM ne pourra être considérée comme sécurisée par la présence du véhicule Vᵢ que si elle se trouve à l'intersection de toutes les trajectoires possibles du véhicule Vᵢ, et si tout point de la cellule est à une distance du véhicule Vᵢ inférieure à la distance d'arrêt la plus courte des trajectoires permettant au véhicule Vᵢ d'atteindre ce point.

Dans la situation de conduite illustrée par la figure 13, l'ensemble ENS_VE de véhicules environnant comprend deux véhicules V1 et V2. Une seule trajectoire est envisageable pour le véhicule V1. A cette trajectoire est associée une distance d'arrêt D_STOP11, qui permet de définir un groupe de cellules G11 couvrant la distance d'arrêt D_STOP11. Les cellules du groupe G11 qui sont dans un premier état indéterminé prendront alors un deuxième état sécurisé.

De même, une seule trajectoire est envisageable pour le véhicule V2. A cette trajectoire est associée une distance d'arrêt D_STOP21, qui permet de définir un groupe de cellules G21 couvrant la distance d'arrêt D_STOP21. Les cellules du groupe G21 qui sont dans un premier état indéterminé prendront alors un deuxième état sécurisé.

On enchaine ensuite sur une quatrième étape E4 de transmission au module de décision 3 d'un modèle environnemental M_ENV_T comprenant une association d'un état d'occupation à chaque cellule du modèle géométrique LGM, l'état d'occupation d'une cellule étant le deuxième état s'il est défini dans l'étape E3, sinon l'état d'occupation d'une cellule étant le premier état défini dans l'étape E2.

Ainsi, dans l'étape E4 on construit le modèle M_ENV_T en associant un état enrichi à chaque cellule de la grille LGM. En effet, comme cela est illustré par les tableaux 2 et 3 ci-après, le traitement effectué dans les étapes E1 à E3 permet d'enrichir l'information issue de l'ensemble de moyens de perception 5.

Le tableau 2 illustre un premier mode de réalisation précédemment décrit, dans lequel un même état indéterminé est attribué aux cellules dont on ne connait pas l'état, soit parce qu'elles sont hors du champ de vue FOV, soit parce qu'elles sont cachées par une obstacle.

**[Table 2]**

| Etat déterminé par les moyens de perception | Dans la portée de vue | | | Hors de portée de vue |
|---|---|---|---|---|
| | Libre | Occupé | caché | |
| Etat enrichi par le procédé selon l'invention | Libre | Occupé | neutralisé ou sécurisé ou indéterminé | neutralisé ou sécurisé ou indéterminé |

Le tableau 3 illustre un deuxième mode de réalisation, dans lequel on décompose l'état indéterminé en deux sous-états distincts :
- un état « non observable » attribué à une cellule située hors du champ de vue FOV,
- un état caché, dans lequel une cellule au moins partiellement cachée par un obstacle situé entre le véhicule autonome 100 et la cellule.

**[Table 3]**

| Etat déterminé par les moyens de perception | Dans la portée de vue | | | Hors de portée de vue |
|---|---|---|---|---|
| | Libre | Occupé | Caché | |
| Etat enrichi par le procédé selon l'invention | Libre | Occupé | neutralisé ou sécurisé ou caché | neutralisé ou sécurisé ou non observable |

Après détermination de l'état enrichi de chaque cellule selon l'un des modes de réalisation décrit, la grille LGM est transmise au module de décision 3.

Le procédé selon l'invention se différencie de l'art antérieur, et notamment du document US2018/0322777A1, dans lequel une grille d'occupation n'est définie que sur un espace d'intérêt simple correspondant à l'espace devant le véhicule autonome et la topologie de la route n'est pas prise en compte pour la construction de cette grille. En effet, en premier lieu, le procédé de modélisation selon l'invention prend en compte la forme géométrique des voies de navigation. De plus, la grille LGM comprend non seulement la voie de navigation sur laquelle le véhicule autonome évolue, mais également les voies susceptibles d'interagir avec la voie du véhicule autonome. Ainsi, contrairement à l'art antérieur, le procédé selon l'invention ne se limite pas à une modélisation de la voie située face au véhicule autonome.

Le procédé de modélisation selon l'invention présente ainsi plusieurs avantages. Tout d'abord il fournit une représentation compacte de l'environnement avec lequel le véhicule interagit, car seules les voies d'intérêt sont modélisées. Il s'agit d'une représentation dépendante du contexte, car elle est focalisée sur les zones conditionnant une prise de décision tactique.

En outre, en interprétant le trafic environnant le véhicule autonome 100, la modélisation selon l'invention enrichit les données de perception, notamment sur des cellules non observables par les moyens de perception. Ce traitement d'interprétation permet d'enrichir les états des cellules de deux nouveaux états, un état neutralisé et un état sécurisé, afin de permettre l'exploitation de ces états par le module de décision.

De plus, la modélisation prend en compte les incertitudes de localisation et de perception tout en garantissant l'intégrité des informations fournies au module de prise de décision, notamment en adaptant le pas de discrétisation de la grille LGM en fonction de l'indice de confiance des données de perception.

Par ailleurs le procédé de modélisation selon l'invention est capable de prendre en compte différents types de représentations des données de perception.

Enfin, par sa nature géométrique, la modélisation selon l'invention simplifie le traitement ultérieurement effectué dans le module de décision, notamment en facilitant le calcul de métriques de risque comme par exemple le délai avant collision.

## Revendications

1. Procédé de modélisation d'un environnement tactique d'un premier véhicule automobile autonome (100), l'environnement tactique désignant des données environnementales du véhicule automobile autonome (100) susceptibles d'impacter une prise de décision tactique portant sur des décisions à moyen terme, le premier véhicule automobile autonome (100) comprenant :
- un ensemble de moyens de perception (5),
- un module de décision (3), et
- un module de modélisation géométrique (4) d'un ensemble de voies de circulation (ENS_VOIES) à prendre en compte par le module de décision (3),
l'ensemble de voies de circulation (ENS_VOIES) comprenant des voies de premier ordre (V11) interagissant directement avec une voie où circule le premier véhicule automobile autonome (100) selon un mode d'interaction défini dans un ensemble prédéfini de modes d'interaction, et des voies de second ordre (V21, V22) interagissant avec les voies de premier ordre (V11), selon un mode d'interaction défini dans l'ensemble prédéfini de modes d'interaction,
l'ensemble prédéfini de modes d'interaction comprenant au moins un mode d'interaction parmi un maintien du véhicule automobile autonome (100) sur sa voie de circulation, un changement de voie du véhicule automobile autonome (100) sur une voie adjacente à sa voie de circulation, une fusion de la voie du véhicule automobile autonome (100) avec une autre voie de circulation, une traversée de la voie du véhicule automobile autonome (100) par au moins une autre voie de circulation,
le procédé de modélisation comprenant :
- Une première étape (E1) de construction d'un modèle géométrique (LGM), par le module de modélisation géométrique (4), d'un ensemble de voies de circulation (ENS_VOIES) du premier ordre (V11) et du second ordre (V21, V22) et de décomposition des voies de circulation en un ensemble de cellules (ENS_C) de longueur identique,
- Une deuxième étape (E2) d'estimation, à partir de données issues de l'ensemble de moyens de perception (5), d'un premier état d'occupation de chaque cellule de l'ensemble de cellules (ENS_C) comme étant soit un état libre, soit un état occupé, soit un état indéterminé, l'état indéterminé étant attribué à une cellule située hors d'un champ de vue (FOV) de l'ensemble de moyens de perception (5) et/ou à une cellule au moins partiellement cachée par un obstacle situé entre le premier véhicule automobile autonome (100) et la cellule,
- Une troisième étape (E3) de définition, à partir de données issues de l'ensemble de moyens de perception (5), d'un deuxième état d'occupation pour chaque cellule donnée dont le premier état d'occupation est indéterminé comme étant neutralisé ou sécurisé, par analyse du trafic situé sur les voies de circulation du second ordre, comprenant une sous-étape (E31) d'attribution d'un état neutralisé à la cellule donnée si un deuxième véhicule (131), distinct du premier véhicule automobile autonome (100) et circulant sur une voie de deuxième ordre (V21), occupe une première cellule située au croisement d'une voie de premier ordre (V11) et de la voie de second ordre (V21) et en aval de la cellule donnée selon le sens de circulation de la voie de premier ordre,
- Une quatrième étape (E4) de transmission au module de décision (3) d'un modèle environnemental (M_ENV_T) comprenant une association d'un état d'occupation à chaque cellule du modèle géométrique (LGM), l'état d'occupation d'une cellule étant le deuxième état s'il est défini, sinon l'état d'occupation d'une cellule étant le premier état.

2. Procédé de modélisation selon la revendication précédente, **caractérisé en ce que** la troisième étape (E3) comprend, suite à la sous-étape (E31) d'attribution d'un état neutralisé, une sous-étape (E32) d'attribution d'un état sécurisé à la cellule donnée comprenant une détermination d'une zone d'arrêt d'urgence (Z_STOPᵢ) associée à chaque véhicule (Vᵢ) environnant le premier véhicule automobile autonome (100), la détermination d'une zone d'arrêt d'urgence (Z_STOPᵢ) comprenant :
- une détermination d'un ensemble (ENS_Tᵢ) de trajectoires possibles (Tᵢⱼ) du véhicule environnant (Vᵢ), puis
- pour chaque trajectoire (Tᵢⱼ) possible,
∘ un calcul d'une distance d'arrêt (D_STOPᵢⱼ) du véhicule environnant (Vᵢ) et
∘ une détermination d'un groupe (Gᵢⱼ) de cellules adjacentes situé sur la trajectoire possible, à l'avant du véhicule environnant (Vᵢ) et à une distance du véhicule environnant inférieure à la distance d'arrêt du véhicule environnant (D_STOPᵢⱼ),
la zone d'arrêt d'urgence (Z_STOPᵢ) du véhicule environnant (Vᵢ) étant déterminée comme étant l'intersection des groupes de cellules adjacentes associés à chaque trajectoire possible (Tᵢⱼ), puis,
- une attribution d'un état sécurisé à chaque cellule de la zone d'arrêt d'urgence (Z_STOPᵢ) dont le deuxième état d'occupation est différent de l'état neutralisé.

3. Procédé de modélisation selon l'une des revendications précédentes, **caractérisé en ce que** la deuxième étape (E2) d'estimation d'un premier état de chaque cellule de l'ensemble de cellules (ENS_C) comprend une superposition de l'ensemble de cellules (ENS_C) et d'une carte de répartition (103) d'un espace couvert par le champ de vue (FOV) en zones libres, occupées ou indéterminées, la carte de répartition (103) étant issue de l'ensemble de moyens de perception (5), **en ce que** l'état d'une cellule est,
- occupé si un premier nombre de points de la cellule se situant dans une ou plusieurs zones occupées de la carte de répartition (103) est supérieur à un premier seuil donné (MIN_OCC), sinon
- libre si un deuxième nombre de points de la cellule se situant dans une ou plusieurs zones libres de la carte de répartition (103) est supérieur à un deuxième seuil donné (MIN_LIB), sinon
- indéterminé,
et **en ce que** les premier et deuxième seuils donnés (MIN_OCC, MIN_LIB) sont soit un nombre minimal de points en valeur absolue, soit un pourcentage minimal d'un nombre total de points contenus dans la cellule.

4. Procédé de modélisation selon la revendication précédente, **caractérisé en ce que** la carte de répartition (103) comprend une représentation de l'espace environnant le premier véhicule automobile autonome (100) par des polygones, ou par une grille d'occupation, ou par une carte de disparité.

5. Procédé de modélisation selon l'une des revendications précédentes, **caractérisé en ce que** les moyens de perception (5) fournissent des données de perception et un indice de confiance (IC) associé aux données de perception, et **en ce que** la première étape (E1) de construction d'un modèle géométrique comprend :
- une sous-étape (E11) de réception de données de perception issues de l'ensemble de moyens de perception (5), et d'un indice de confiance (IC) associé aux données de perception,
- une sous-étape (E12) de calcul d'un pas de discrétisation optimisé (POPT) en fonction de l'indice de confiance (IC),
- une sous-étape (E13) de transmission du pas de discrétisation optimisé (POPT) au module de modélisation géométrique (4), puis
- une sous-étape (E14) de réception d'un modèle géométrique issu du module de modélisation géométrique (4), le modèle géométrique comprenant un ensemble de voies (ENS_VOIES) de premier et de second ordre décomposées en un ensemble de cellules (ENS_C) de longueur optimisée (POPT).

6. Procédé de modélisation selon la revendication précédente, **caractérisé en ce que** la sous-étape (E12) de calcul d'un pas de discrétisation optimisé (POPT) comprend
- une minimisation d'un nombre de cellules faussement négatives, une cellule faussement négative étant estimée dans l'état libre, dans l'état neutralisé ou dans l'état sécurisé alors qu'elle est en réalité dans l'état occupé,
et optionnellement,
- une minimisation d'un nombre de cellules faussement positives, une cellule faussement positive étant estimée dans l'état occupé, alors qu'elle est en réalité dans l'état libre, dans l'état neutralisé ou dans l'état sécurisé.

7. Dispositif (10) de modélisation d'un environnement d'un premier véhicule automobile autonome (100) le premier véhicule automobile autonome étant équipé d'un moyen de contrôle autonome de mouvement (20) et d'un module de décision (3), le dispositif comprenant des éléments (1, 2, 4, 5, 6, 7, 8, 61, 62, 63, 611, 612, 613) matériels et/ou logiciels mettant en œuvre le procédé selon l'une des revendications 1 à 6.

8. Produit programme d'ordinateur comprenant des instructions de code de programme enregistrées sur un support lisible par ordinateur pour mettre en œuvre les étapes du procédé selon l'une quelconque des revendications 1 à 6 lorsque ledit programme fonctionne sur un ordinateur.

9. Support d'enregistrement de données, lisible par un ordinateur, sur lequel est enregistré un programme d'ordinateur comprenant des instructions de code de programme de mise en œuvre du procédé selon l'une des revendications 1 à 6.

## Patentansprüche

1. Verfahren zur Modellierung einer taktischen Umgebung eines ersten autonomen Kraftfahrzeugs (100), wobei die taktische Umgebung Umgebungsdaten des autonomen Kraftfahrzeugs (100) bezeichnet, die geeignet sind, ein Treffen einer taktischen Entscheidung zu beeinflussen, die sich auf mittelfristige Entscheidungen bezieht, wobei das erste autonome Kraftfahrzeug (100) umfasst:
- eine Menge von Wahrnehmungsmitteln (5),
- ein Entscheidungsmodul (3), und
- ein Modul zur geometrischen Modellierung (4) einer Menge von Fahrspuren (ENS_VOIES), die von dem Entscheidungsmodul (3) zu berücksichtigen sind,
wobei die Menge von Fahrspuren (ENS_VOIES) Spuren erster Ordnung (V11), die direkt mit einer Spur, auf der das erste autonome Kraftfahrzeug (100) fährt, gemäß einem Interaktionsmodus, der in einer vordefinierten Menge von Interaktionsmodi definiert ist, interagieren, und Spuren zweiter Ordnung (V21, V22), die mit den Spuren erster Ordnung (V11) gemäß einem Interaktionsmodus, der in der vordefinierten Menge von Interaktionsmodi definiert ist, interagieren, umfasst,
wobei die vordefinierte Menge von Interaktionsmodi mindestens einen Interaktionsmodus unter einem Halten des autonomen Kraftfahrzeugs (100) auf seiner Fahrspur, einem Spurwechsel des autonomen Kraftfahrzeugs (100) auf eine zu seiner Fahrspur benachbarte Spur, einem Zusammenführen der Spur des autonomen Kraftfahrzeugs (100) mit einer anderen Fahrspur, einem Queren der Spur des autonomen Kraftfahrzeugs (100) durch mindestens eine andere Fahrspur umfasst,
das Verfahren zur Modellierung umfassend:
- einen ersten Schritt (E1) des Aufbauens eines geometrischen Modells (LGM), durch das Moduls zur geometrischen Modellierung (4), einer Menge von Fahrspuren (ENS_VOIES) erster Ordnung (V11) und zweiter Ordnung (V21, V22) und des Zerlegens der Fahrspuren in eine Menge von Zellen (ENS_C) gleicher Länge,
- einen zweiten Schritt (E2) des Schätzens, ausgehend von aus der Menge von Wahrnehmungsmitteln (5) hervorgegangenen Daten, eines ersten Belegungszustands jeder Zelle der Menge von Zellen (ENS_C) als entweder ein freier Zustand oder ein belegter Zustand oder ein unbestimmter Zustand, wobei der unbestimmte Zustand einer Zelle zugewiesen wird, die außerhalb eines Sichtfelds (FOV) der Menge von Wahrnehmungsmitteln (5) gelegen ist, und/oder einer Zelle, die zumindest teilweise durch ein Hindernis verdeckt wird, das zwischen dem ersten autonomen Kraftfahrzeug (100) und der Zelle gelegen ist,
- einen dritten Schritt (E3) des Definierens, ausgehend von aus der Menge von Wahrnehmungsmitteln (5) hervorgegangenen Daten, eines zweiten Belegungszustands für jede gegebene Zelle, deren erster Belegungszustand unbestimmt ist, als neutralisiert oder gesichert durch Analysieren des Verkehrs auf den Fahrspuren zweiter Ordnung, umfassend einen Teilschritt (E31) des Zuweisens eines neutralisierten Zustands zu der gegebenen Zelle, wenn ein zweites Fahrzeug (131), das von dem ersten autonomen Kraftfahrzeug (100) verschieden ist und auf einer Spur zweiter Ordnung (V21) fährt, eine erste Zelle belegt, die an der Kreuzung einer Spur erster Ordnung (V11) und der Spur zweiter Ordnung (V21) gelegen und hinter der gegebenen Zelle in Fahrtrichtung der Spur erster Ordnung gelegen ist,
- einen vierten Schritt (E4) des Übertragens an das Entscheidungsmodul (3) eines Umgebungsmodells (M_ENV_T), das eine Zuordnung eines Belegungszustands zu jeder Zelle des geometrischen Modells (LGM) umfasst, wobei der Belegungszustand einer Zelle der zweite Zustand ist, wenn er definiert ist, wobei der Belegungszustand einer Zelle ansonsten der erste Zustand ist.

2. Verfahren zur Modellierung nach dem vorhergehenden Anspruch, **dadurch gekennzeichnet, dass** der dritte Schritt (E3), nach dem Teilschritt (E31) des Zuweisens eines neutralisierten Zustands, einen Teilschritt (E32) des Zuweisens eines gesicherten Zustands zu der gegebenen Zelle umfasst, umfassend ein Bestimmen einer Notanhaltezone (Z_STOPᵢ), die jedem Fahrzeug (Vᵢ) zugewiesen ist, das das erste autonome Kraftfahrzeug (100) umgibt, wobei das Bestimmen einer Notanhaltezone (Z_STOPᵢ) umfasst:
- ein Bestimmen einer Menge (ENS_Ti) von möglichen Trajektorien (Tᵢⱼ) des umgebenden Fahrzeugs (Vᵢ), dann
- für jede mögliche Trajektorie (Tᵢⱼ),
∘ ein Berechnen eines Anhaltewegs (D_STOPᵢⱼ) des umgebenden Fahrzeugs (Vᵢ) und
∘ ein Bestimmen einer Gruppe (Gᵢⱼ) von benachbarten Zellen, die auf der möglichen Trajektorie vor dem umgebenden Fahrzeug (Vi) und in einem Abstand von dem umgebenden Fahrzeug, der kleiner als der Anhalteweg des umgebenden Fahrzeug (D_STOPᵢⱼ) ist, gelegen ist,
wobei die Notanhaltezone (Z_STOPi) des umgebenden Fahrzeugs (Vᵢ) als die Schnittmenge der Gruppen von benachbarten Zellen definiert ist, die jeder möglichen Trajektorie (Tᵢⱼ) zugeordnet sind, dann
- ein Zuweisen eines gesicherten Zustands zu jeder Zelle der Notanhaltezone (Z_STOPi), deren zweiter Belegungszustand von dem neutralisierten Zustand verschieden ist.

3. Verfahren zur Modellierung nach einem der vorhergehenden Ansprüche, **dadurch gekennzeichnet, dass** der zweite Schritt (E2) des Schätzens eines ersten Zustands jeder Zelle der Menge von Zellen (ENS_C) eine Überlagerung der Menge von Zellen (ENS_C) und einer Aufteilungskarte (103) zur Aufteilung eines von dem Sichtfeld (FOV) abgedeckten Raums in freie, belegte oder unbestimmte Zonen umfasst, wobei die Aufteilungskarte (103) aus der Menge von Wahrnehmungsmitteln (5) hervorgegangen ist, dadurch, dass der Zustand einer Zelle
- belegt ist, wenn eine erste Anzahl von Punkten der Zelle, die in einer oder mehreren belegten Zonen der Aufteilungskarte (103) gelegen sind, größer als ein erster gegebener Schwellenwert (MIN_OCC) ist, ansonsten
- frei ist, wenn eine zweite Anzahl von Punkten der Zelle, die in einer oder mehreren freien Zonen der Aufteilungskarte (103) gelegen sind, größer als ein zweiter gegebener Schwellenwert (MIN_LIB) ist, ansonsten
- unbestimmt ist,
und dass der erste und zweite gegebene Schwellenwert (MIN_OCC, MIN_LIB) entweder eine minimale Anzahl von Punkten als Absolutwert oder ein minimaler Prozentsatz einer Gesamtzahl von in der Zelle enthaltenen Punkten sind.

4. Verfahren zur Modellierung nach dem vorhergehenden Anspruch, **dadurch gekennzeichnet, dass** die Aufteilungskarte (103) eine Darstellung des das erste autonome Kraftfahrzeug (100) umgebenden Raums durch Polygone oder durch ein Belegungsgitter oder durch eine Disparitätskarte umfasst.

5. Verfahren zur Modellierung nach einem der vorhergehenden Ansprüche, **dadurch gekennzeichnet, dass** die Wahrnehmungsmittel (5) Wahrnehmungsdaten und einen den Wahrnehmungsdaten zugeordneten Konfidenzindex (IC) liefern, und dass der erste Schritt (E1) des Aufbauens eines geometrischen Modells umfasst:
- einen Teilschritt (E11) des Empfangens von Wahrnehmungsdaten, die aus der Menge von Wahrnehmungsmitteln (5) hervorgegangen sind, und eines den Wahrnehmungsdaten zugeordneten Konfidenzindex (IC),
- einen Teilschritt (E12) des Berechnens eines optimierten Diskretisierungsschritts (POPT) in Abhängigkeit von dem Konfidenzindex (IC),
- einen Teilschritt (E13) des Übertragens des optimierten Diskretisierungsschritts (POPT) an das Modul zur geometrischen Modellierung (4), dann
- einen Teilschritt (E14) des Empfangens eines geometrischen Modells, das aus dem Modul zur geometrischen Modellierung (4) hervorgegangen ist, wobei das geometrische Modell eine Menge von Spuren (ENS_VOIES) erster und zweiter Ordnung umfasst, die in eine Menge von Zellen (ENS_C) mit optimierter Länge (POPT) zerlegt sind.

6. Verfahren zur Modellierung nach dem vorhergehenden Anspruch, **dadurch gekennzeichnet, dass** der Teilschritt (E12) des Berechnens eines optimierten Diskretisierungsschritts (POPT) umfasst
- eine Minimierung einer Anzahl von falsch-negativen Zellen, wobei eine falsch-negative Zelle in dem freien Zustand, in dem neutralisierten Zustand oder in dem gesicherten Zustand geschätzt wird, obwohl sie in Wirklichkeit in dem belegten Zustand ist,
und optional,
- eine Minimierung einer Anzahl von falsch-positiven Zellen, wobei eine falsch-positive Zelle in dem belegten Zustand geschätzt wird, obwohl sie in Wirklichkeit in dem freien Zustand, in dem neutralisierten Zustand oder in dem gesicherten Zustand ist.

7. Vorrichtung (10) zur Modellierung einer Umgebung eines ersten autonomen Kraftfahrzeugs (100), wobei das erste autonome Kraftfahrzeug mit einem Mittel zur autonomen Bewegungssteuerung (20) und mit einem Entscheidungsmodul (3) ausgestattet ist, wobei die Vorrichtung Hardware und/oder Softwareelemente (1, 2, 4, 5, 6, 7, 8, 61, 62, 63, 611, 612, 613) umfasst, die das Verfahren nach einem der Ansprüche 1 bis 6 durchführen.

8. Computerprogrammprodukt, das Programmcodeanweisungen umfasst, die auf einem computerlesbaren Medium gespeichert sind, um die Schritte des Verfahrens nach einem der Ansprüche 1 bis 6 durchzuführen, wenn das Programm auf einem Computer läuft.

9. Computerlesbares Datenspeichermedium, auf dem ein Computerprogramm gespeichert ist, das Programmcodeanweisungen zur Durchführung des Verfahrens nach einem der Ansprüche 1 bis 6 umfasst.

## Claims

1. Method for modelling a tactical environment of a first autonomous motor vehicle (100), the tactical environment designating environmental data of the autonomous motor vehicle (100) that are likely to impact tactical decision-making relating to medium-term decisions, the first autonomous motor vehicle (100) comprising:
- a set of perception means (5),
- a decision module (3), and
- a module (4) for geometrically modelling a set of traffic lanes (ENS_VOIES) that are to be taken into account by the decision module (3),
the set of traffic lanes (ENS_VOIES) comprising first-order lanes (V11) interacting directly with a lane in which the first autonomous motor vehicle (100) is travelling, according to an interaction mode defined in a predefined set of interaction modes, and second-order lanes (V21, V22) interacting with the first-order lanes (V11), according to an interaction mode defined in the predefined set of interaction modes,
the predefined set of interaction modes comprising at least one interaction mode among keeping the autonomous motor vehicle (100) in its traffic lane, changing lane of the autonomous motor vehicle (100) into a lane adjacent to its traffic lane, merging the lane of the autonomous motor vehicle (100) with another traffic lane, crossing the lane of the autonomous motor vehicle (100) by at least one other traffic lane,
the modelling method comprising:
- a first step (E1) of constructing a geometric model (LGM), by the geometric modelling module (4), of a set of traffic lanes (ENS_VOIES) of the first order (V11) and of the second order (V21, V22) and breaking down the traffic lanes into a set of cells (ENS_C) of identical length,
- a second step (E2) of estimating, on the basis of data from the set of perception means (5), a first occupation state of each cell of the set of cells (ENS_C) as being either a free state, an occupied state, or an indeterminate state, the indeterminate state being assigned to a cell located outside a field of view (FOV) of the set of perception means (5) and/or to a cell at least partially hidden by an obstacle located between the first autonomous motor vehicle (100) and the cell,
- a third step (E3) of defining, on the basis of data from the set of perception means (5), a second occupation state for each given cell the first occupation state of which is indeterminate as being neutralized or secured, by analyzing the traffic located in the second-order traffic lanes, comprising a sub-step (E31) of assigning a neutralized state to the given cell if a second vehicle (131), distinct from the first autonomous motor vehicle (100) and travelling in a second-order lane (V21), occupies a first cell located at the intersection of a first-order lane (V11) and of the second-order lane (V21) and downstream of the given cell in the direction of travel of the first-order lane,
- a fourth step (E4) of transmitting an environmental model (M_ENV_T) to the decision module (3), said environmental model comprising association of an occupation state with each cell of the geometric model (LGM), the occupation state of a cell being the second state if it is defined, otherwise the occupation state of a cell being the first state.

2. Modelling method according to the preceding claim, **characterized in that** the third step (E3) comprises, following the sub-step (E31) of assigning a neutralized state, a sub-step (E32) of assigning a secured state to the given cell, comprising determining an emergency stop zone (Z_STOPᵢ) associated with each vehicle (Vᵢ) surrounding the first autonomous motor vehicle (100), the determination of an emergency stop zone (Z_STOPᵢ) comprising:
- determining a set (ENS_Tᵢ) of possible trajectories (Tᵢⱼ) of the surrounding vehicle (Vᵢ), then
- for each possible trajectory (Tᵢⱼ),
∘ calculating a stopping distance (D_STOPᵢⱼ) of the surrounding vehicle (Vᵢ) and
∘ determining a group (Gᵢⱼ) of adjacent cells located on the possible trajectory ahead of the surrounding vehicle (Vᵢ) and at a distance from the surrounding vehicle of less than the stopping distance of the surrounding vehicle (D_STOPᵢⱼ),
the emergency stop zone (Z_STOPi) of the surrounding vehicle (Vᵢ) being determined as being the intersection of the groups of adjacent cells associated with each possible trajectory (Tᵢⱼ), then,
- assigning a secured state to each cell of the emergency stop zone (Z_STOPᵢ) the second occupation state of which is different from the neutralized state.

3. Modelling method according to either of the preceding claims, **characterized in that** the second step (E2) of estimating a first state of each cell of the set of cells (ENS_C) comprises superpositioning the set of cells (ENS_C) and a distribution map (103) of an area covered by the field of view (FOV) in free, occupied or indeterminate zones, the distribution map (103) coming from the set of perception means (5), **in that** the state of a cell is
- occupied if a first number of points of the cell located in one or more occupied zones of the distribution map (103) is greater than a first given threshold (MIN_OCC), otherwise
- free if a second number of points of the cell located in one or more free zones of the distribution map (103) is greater than a second given threshold (MIN_LIB), otherwise
- indeterminate,
and **in that** the first and second given thresholds (MIN_OCC, MIN_LIB) are either a minimum number of points in absolute value, or a minimum percentage of a total number of points contained in the cell.

4. Modelling method according to the preceding claim, **characterized in that** the distribution map (103) comprises a representation of the area surrounding the first autonomous motor vehicle (100) using polygons, or using an occupation grid, or using a disparity map.

5. Modelling method according to one of the preceding claims, **characterized in that** the perception means (5) supply perception data and a confidence index (IC) associated with the perception data, and **in that** the first step (E1) of constructing a geometric model comprises:
- a sub-step (E11) of receiving perception data from the set of perception means (5), and a confidence index (IC) associated with the perception data,
- a sub-step (E12) of calculating an optimized discretization step (POPT) on the basis of the confidence index (IC),
- a sub-step (E13) of transmitting the optimized discretization step (POPT) to the geometric modelling module (4), then
- a sub-step (E14) of receiving a geometric model from the geometric modelling module (4), the geometric model comprising a set of lanes (ENS_VOIES) of first and second order which are broken down into a set of cells (ENS_C) of optimized length (POPT).

6. Modelling method according to the preceding claim, **characterized in that** the sub-step (E12) of calculating an optimized discretization step (POPT) comprises
- minimizing a number of false negative cells, a false negative cell being estimated in the free state, in the neutralized state or in the secured state while it is actually in the occupied state,
and optionally,
- minimizing a number of false positive cells, a false positive cell being estimated in the occupied state while it is actually in the free state, in the neutralized state or in the secured state.

7. Device (10) for modelling an environment of a first autonomous motor vehicle (100), the first autonomous motor vehicle being equipped with an autonomous movement control means (20) and a decision module (3), the device comprising hardware and/or software elements (1, 2, 4, 5, 6, 7, 8, 61, 62, 63, 611, 612, 613) implementing the method according to one of Claims 1 to 6.

8. Computer program product comprising program code instructions stored on a computer-readable medium for implementing the steps of the method according to any one of Claims 1 to 6 when said program runs on a computer.

9. Computer-readable data storage medium on which is stored a computer program comprising program code instructions for implementing the method according to one of Claims 1 to 6.
